# EUROPEAN PATENT APPLICATION

(11) **EP 1 932 613 A1**
(43) Date of publication of application: **18.06.2008**
(21) Application number: 07116053.5
(22) Date of filing: 10.09.2007
(51) Int. Cl.: B23K 9/133

(54) **Pail-pack for welding wire**

(30) Priority: 13.12.2006 KR 20060127110
(71) Applicant: Kiswel Ltd., Sasang-gu, Busan 617-843 (KR)
(72) Inventor: Park, Byung Ho, 641-120, Changwon-si, Gyeongnam (KR)
(74) Representative: Beck, Michael Rudolf

(57) **Abstract**

Provided is a pail-pack for welding wire including: an outer tube (10) forming a main body and having a square cross-section; a cover (15) covering an upper end of the outer tube (10); and a bottom plate (20) provided inside a lower end of the outer tube (10) and having a support part (22) that is bent downward from an edge of the bottom plate (20) to contact an inner lateral surface of the lower end of the outer tube (10). Accordingly, the pail-pack for welding wire is easy to load and keep and can be carried more stably.

## Description

### CROSS-REFERENCE TO RELATED APPLICATION

This application claims the benefit of Korean Patent Application No. 2006-127110, filed on December 13, 2006, which is hereby incorporated by reference as if fully set forth herein.

### BACKGROUND OF THE INVENTION

### 1. Field of the Invention

The present invention relates to a pail-pack for welding wire, and more particularly, to a pail-pack for welding wire that is easy to load and keep and can be carried more stably.

### 2. Discussion of Related Art

In general, methods of winding welding wire used for automatic and semiautomatic welding apparatuses may be classified into a spool winding method and a pail-pack winding method.

In the case of the pail-pack winding method, welding wire is wound in a pail-pack container. Here, the structure of the pail-pack container may be largely divided into a single tube structure having only an outer tube and a double tube structure having outer and inner tubes.

In the pail-pack winding method, since a large amount of welding wire is kept in a wound state, it is necessary to efficiently feed the welding wire. The pail-pack winding method is mainly employed in long-time welding operations because a large amount of welding wire can be wound.

Since a pail-pack for welding wire may improve the efficiency of a long-time welding operation or a step-by-step welding operation, it is widely used.

However, since the foregoing conventional pail-pack for welding wire is formed of steel or includes bolts, it is difficult to recycle the pail-pack for welding wire. Also, when a transfer apparatus, such as a forklift truck, is used to load and carry the conventional pail-pack for welding wire, an additional pallet is needed.

Further, while welding wire is being withdrawn from the conventional pail-pack for welding wire, it may become kinked and tangled. In order to solve this problem, an additional component is required, thereby complicating the structure of the pail-pack and increasing production cost.

### SUMMARY OF THE INVENTION

The present invention is directed to a pail-pack for welding wire which is easy to load and keep and can be carried more stably.

According to an aspect of the invention, a pail-pack for welding wire comprises: an outer tube forming a main body and having a square cross-section; a cover covering an upper end of the outer tube; and a bottom plate provided inside a lower end of the outer tube and having a support part that is bent downward from an edge of the bottom plate to contact an inner lateral surface of the lower end of the outer tube.

At least one penetration part for transportation may be formed through a pair of opposite support parts.

A portion of a lower lateral surface of the outer tube may be penetrated to correspond to the penetration part.

An upper end of the penetration part may form the same surface as a bottom surface of the bottom plate.

A reinforcing member may be provided on at least one of the center and both sides of a lower space part of the bottom plate in a direction of the penetration part.

A polygonal tube may be inscribed in the outer tube, have a polygonal cross-section, and contain a welding wire therein.

A bottom reinforcing plate may further be provided between a top surface of the bottom plate and a lower portion of the polygonal tube to have a shape corresponding to an inner cross-section of the outer tube.

A support member may be provided in a lengthwise direction of the polygonal tube between the outer tube and the polygonal tube, and have one side contacting an inner surface of the outer tube and the other side contacting an outer surface of the polygonal tube to form a support structure.

A moisture-proof bag may be formed of vinyl and provided between the outer tube and the polygonal tube to enclose the polygonal tube.

A hanging band may include: two ends exposed through both sides of the outer tube; and a central portion enclosing a bottom surface of the bottom plate through openings formed on both sides of the bottom plate.

The openings may be formed in portions in which the support parts are bent to face each other from opposite sides of the bottom plate to correspond to the width and thickness of the hanging band.

The central portion of the hanging band may be combined with a bolt member and a nut member provided through the center of the bottom plate and fixed to the bottom plate.

The hanging band may be formed of polypropylene.

The lower end of the outer tube may be combined with the support part by sewing a string or by connecting a plurality of stapler pins in a circumferential direction.

A pressure plate may be provided on the welding wire.

The cover, the outer tube, the bottom plate, the polygonal tube, and the support member may be formed of a paper material that is obtained by compressing multifold paper layers using a press processing technique.

The cover may include: a top surface having a shape corresponding to the cross-section of the outer tube; and an adhesion part that is bent in a certain direction from an edge of the top surface and closely adhered to at least one of outer and inner surfaces of the outer tube.

### BRIEF DESCRIPTION OF THE DRAWINGS

The above and other objects, features and advantages of the present invention will become more apparent to those of ordinary skill in the art by describing in detail exemplary embodiments thereof with reference to the attached drawings in which:
Fig. 1 is an exploded perspective view of a pail-pack for welding wire according to a first exemplary embodiment of the present invention;
Fig. 2 is a partially cutaway perspective view of the pail-pack for welding wire shown in Fig. 1;
Figs. 3 and 4 are plan views of the pail-pack for welding wire shown in Fig. 1;
Fig. 5 is a cross-sectional view of the pail-pack for welding wire shown in Fig. 1;
Fig. 6 is an exploded perspective bottom view of a bottom plate of the pail-pack for welding wire shown in Fig. 1;
Fig. 7 is a partial cross-sectional view of the pail-pack for welding wire shown in Fig. 1;
Fig. 8 is a partially cutaway perspective view of a pail-pack for welding wire according to a second exemplary embodiment of the present invention;
Fig. 9 is a partial cross-sectional view taken along line A-A of Fig. 8; and
Fig. 10 is a partially cutaway perspective view of a pail-pack for welding wire according to a third exemplary embodiment of the present invention.

### DETAILED DESCRIPTION OF EXEMPLARY EMBODIMENTS

Hereinafter, exemplary embodiments of the present invention will be described in detail with reference to the accompanying drawings, in which like reference numerals refer to like elements.

A pail-pack for welding wire according to exemplary embodiments of the present invention will now be described with reference to the accompanying drawings.

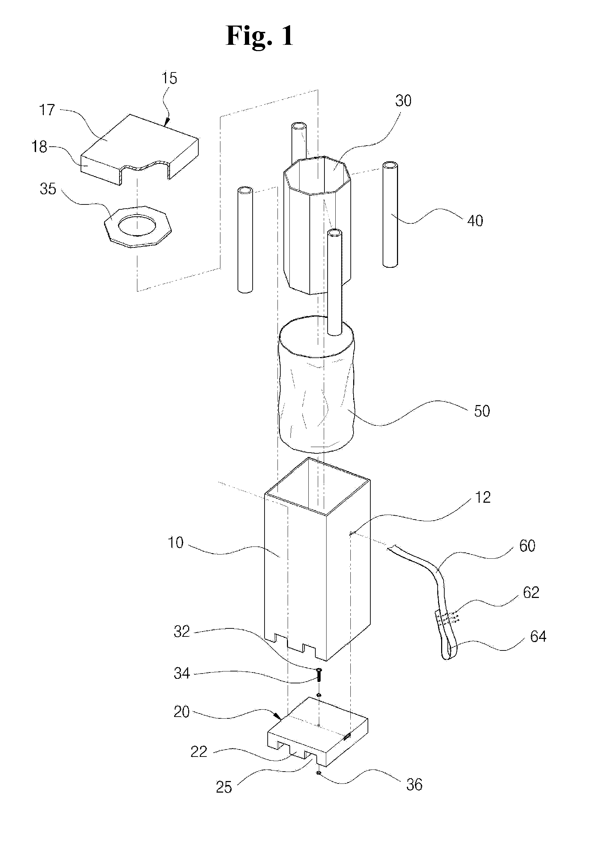

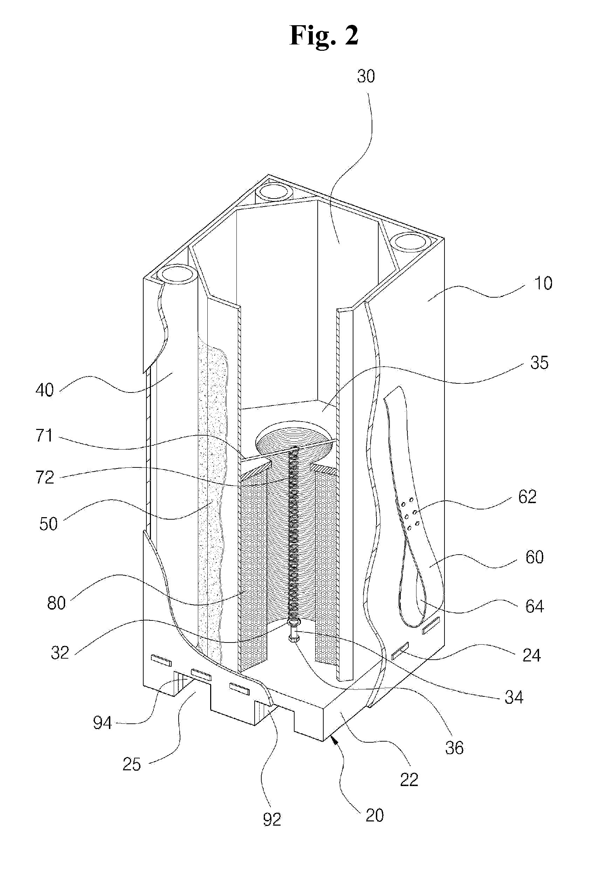

Figs. 1 and 2 are an exploded perspective view and a partially cutaway perspective view of a pail-pack for welding wire according to a first exemplary embodiment of the present invention, respectively.

Referring to Figs. 1 and 2, the pail-pack for welding wire may include an outer tube 10, a bottom plate 20, a polygonal tube 30, and a support member 40.

The bottom plate 20 is provided in a lower end of the outer tube 10, the polygonal tube 30 having a polygonal section is disposed inside the outer tube 10, and welding wire 80 is contained in the polygonal tube 30. Also, since at least one penetration part 25 is formed in the bottom plate 20, it becomes easier to carry the pail-pack using a transfer apparatus, such as a forklift truck.

Here, the transfer apparatus is not limited to the forklift truck and may be other typical apparatuses used for transportation.

Specifically, the outer tube 10 may have a polygonal cross-section, for example, a square cross-section.

In this construction, respective pail-packs for welding wire can be closely adhered to one another during safekeeping, thereby preventing waste of space for safekeeping and facilitating loading of the pail-packs.

Meanwhile, the bottom plate 20 may be provided inside the lower end of the outer tube 10, and an edge of the bottom plate 20 may be bent downward to form a support part 22. The support part 22 is closely adhered to and combined with an inner lateral surface of the lower end of the outer tube 10. In this case, the support part 22 forms a space where the outer tube 10 is combined with the bottom plate 20 and stably supports a lower portion of the bottom plate 20.

Here, a lower end of the support part 22 may be combined with the lower end of the outer tube 10 in the same position, and thus the bottom plate 20 and the outer tube 10 are both in contact with the ground.

The support part 22 increases resistance to bending and tensile stress applied to an outer peripheral edge of the bottom plate 20, thereby structurally reinforcing the strength of a lower support structure of the bottom plate 20. Accordingly, it is possible to stably maintain the supporting state even when the heavy welding wire 80 is disposed on the bottom plate 20.

Here, the bottom plate 20 and the outer tube 10 may be combined with each other by fixing the support part 22 to the lower end of the outer tube 10 using a plurality of stapler pins 24 at predetermined intervals in a circumferential direction of the outer tube 10. As an alternative to the stapler pins 24, the support part 22 may be combined with the lower end of the outer tube 10 by sewing a string in the circumferential direction.

Meanwhile, at least one penetration part 25 may be formed through a pair of opposite support parts 22 of the support parts 22 to be capable of bringing a fork of a forklift truck into the bottom plate 20.

Here, the penetration part 25 may be formed to have enough width and height to bring a fork of a typical forklift truck into the bottom part 20.

In this case, an upper end of the penetration part 25 may be formed a predetermined distance apart from a top surface of the support part 22. Thus, a sufficient space for connecting the stapler pins 24 or sewing a string can be secured in a portion of the outer tube 10 that contacts an upper portion of the support part 22, thereby improving adhesion of the bottom plate 20 to the outer tube 10.

Also, a lower end of the penetration part 25 may be opened through a bottom surface of the support part 22. Of course, the lower end of the penetration part 25 may not extend to the bottom surface of the support part 22.

Further, an outer surface of the outer tube 10 that contacts the penetration part 25 may be penetrated to correspond to the penetration part 25.

In this construction, when the pail-pack for welding wire is lifted by a fork of a forklift truck introduced into the penetration part 25, both the penetration part 25 and the penetrated surface of the outer tube 10 are brought into contact with the top of the fork of the forklift truck, so that the pail-pack for welding wire can be carried more stably.

Meanwhile, the polygonal tube 30 having a polygonal section may be provided inside the outer tube 10. The polygonal tube 30 may have the same length as the outer tube 10. Also, an inner cylinder (not shown) may be selectively provided in the center of the inside of the polygonal tube 30.

In order to prevent movement or swing of the polygonal tube 30, an outer surface of the polygonal tube 30 may contact the inner lateral surface of the outer tube 10, and a lower end of the polygonal tube 30 may contact an upper surface of the bottom plate 20.

The welding wire 80 is contained in a wound state in the polygonal tube 30.

Also, the support member 40 may be provided between the outer surface of the polygonal tube 30 and an inner surface of the outer tube 10 to support the polygonal tube 30.

Here, the support member 30 is not limited to any specific cross-section, but it may have a circular cross-section so that it contacts both the outer surface of the polygonal tube 30 and the inner surface of the outer tube 10. Also, the support member 40 may have the same length as the polygonal tube 30.

Thus, pressure applied by the wound welding wire 80 to the center of each side of the polygonal tube 30 while the welding wire 80 is wound in the polygonal tube 30 can be counterbalanced by a support force applied continuously by the support member 40 to the center of each side of the polygonal tube 30. Thus, each side of the polygonal tube 30 can be prevented from being bent outward.

Since the support member 40 has a cylindrical cross-section, support strength required to support each side of the polygonal tube 30 can be further reinforced.

Also, even if the support member 40 is not adhered using an adhesive, it may be fixed between the outer tube 10 and the polygonal tube 30. Without the adhesive, it is easy to recycle the pail-pack for welding wire and prevent the generation of poisonous gases from the adhesive in a burn-up process.

Meanwhile, the polygonal tube 30 is not limited to any specific cross-section, but it may have a hexagonal cross-section or an octagonal cross-section in order to increase the inner area of the polygonal tube 30 and permit the support member 40 to have an appropriate size. As a result, a larger amount of welding wire can be contained in the polygonal tube 30 and the support member 40 can perform its function sufficiently. In this case, the polygonal tube 30 may have a hexagonal cross-section.

Also, a cover 15 may be provided on the outer tube 10 to cover the outer tube 10. The cover 15 may include a top surface 17 having a shape corresponding to the cross-section of the outer tube 10 and an adhesion part 18, which is bent in a certain direction from an edge of the top surface 17.

The adhesion part 18 is closely adhered to at least one of the outer and inner surfaces of the outer tube 10, so the cover 15 covers an upper part of the outer tube 10.

When the adhesion part 18 contacts the inner surface of the outer tube 10, the polygonal tube 30 and the support member 40 may have shorter lengths by the length of the adhesion part 18 inserted into the inner surface of the outer tube 10.

The outer tube 10, the cover 15, the bottom plate 20, the polygonal tube 30, and the support member 40 may be formed of a paper material obtained by compressing multifold paper layers by means of a press processing technique using a mold, thereby making the pail-pack easier to recycle.

Of course, it is also possible to form the outer tube 10, the cover 15, the bottom plate 20, and the polygonal tube 30 by bending multifold paper layers to meet a required shape.

A bolt member 34 may be connected through the center of the bottom plate 20, and a fixing ring 32 may be provided at an upper end of the bolt member 34. A nut member 36 may be combined with each of the inner and outer surfaces of the bottom plate 20. The nut member 36 may be combined with the bolt member 34 to fix the bolt member 34.

A pressure plate 35 may be provide on the wound welding wire 80 to apply pressure to the welding wire 80, and a mounting bracket 71 may be provided on the pressure plate 35.

The mounting bracket 71 may be provided across the pressure plate 35 to contact the top of the pressure plate 35. Also, both ends of the mounting bracket 71 may be located in corners of the polygonal tube 30, so that they can contact an inner surface of the polygonal tube 30, thereby preventing rotation of the mounting bracket 71.

A lower end of a spring 72 is connected to the fixing ring 32, and an upper end of the spring 72 is connected to the mounting bracket 71. The spring 72 pulls the pressure plate 35 downward. Thus, the pressure plate 35 can continuously apply downward pressure to the wound welding wire 80 so that the welding wire 80 can be stably maintained in a fixed state.

Here, the upper end of the spring 72 may be connected to the mounting bracket 71 using various methods.

Also, the mounting bracket 71 is not limited to any specific shape and may have various cross-sections, for example, a plate shape, a rod shape, or a square shape. Also, the spring 72 may be replaced by an elastic string.

Meanwhile, a moisture-proof bag 50 may be provided between the outer tube 10 and the polygonal tube 30 to enclose the polygonal tube 30. The moisture-proof bag 50 may be formed of vinyl not to allow moisture to pass therethrough.

The moisture-proof bag 50, which functions to protect the welding wire 80 contained in the polygonal tube 30 from moisture, may enclose a lower portion of the polygonal tube 30. The moisture-proof bag 50 may or may not enclose each of the support members 40. For example, the moisture-proof bag 50 may be located between each of the support members 40 and the polygonal tube 30 not to enclose the support member 40 or located between each of the support members 40 and the outer tube 10 to enclose the support member 40.

Also, a hanging band 60 may be provided at an upper portion of the outer tube 10 to carry the pail-pack for welding wire.

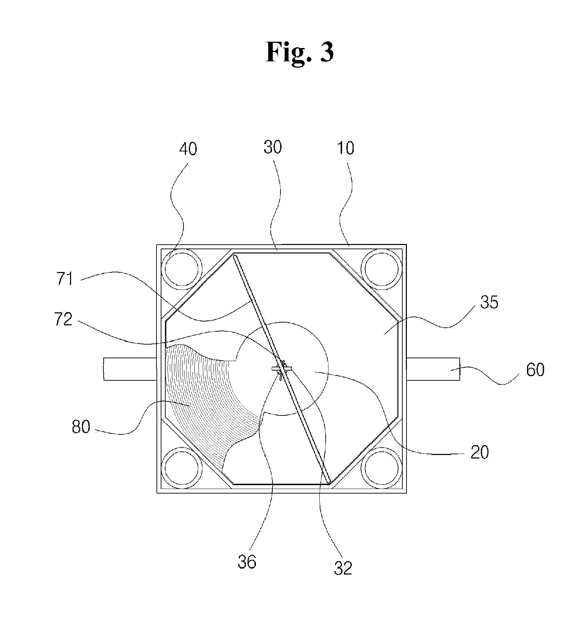

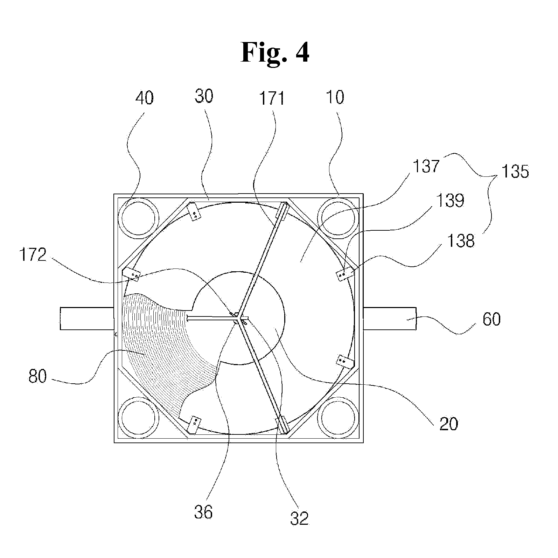

Figs. 3 and 4 are plan views of the pail-pack for welding wire shown in Fig. 1.

As shown in Fig. 3, the pressure plate 35 is provided on the wound welding wire 80 to apply downward pressure to the welding wire 80.

The pressure plate 35 is not limited to any specific outer shape, but it may have an outer portion whose shape corresponds to an inner cross-section of the polygonal tube 30, so that the pressure plate 35 cannot rotate in the polygonal tube 30. In this construction, the pail-pack for welding wire can be structurally simplified and made lightweight because no additional component for preventing rotation of the pressure plate 35 is required.

Also, even if a portion of the wound welding wire 80 withdraws and protrudes to the outside of the pressure plate 35, the portion of the withdrawn welding wire 80 is bound by respective surfaces of the polygonal tube 30 that form a predetermined angle. Therefore, further protrusion of the welding wire 80 to the outside of the pressure plate 35 can be prevented.

Meanwhile, as shown in Fig. 4, a pressure plate 135 may be provided on the wound welding wire 80. The pressure plate 135 may include a pressure part 137 having the form of a hollow circular plate, and a spring-loaded protrusion part 138 protruding from an outer peripheral edge of the pressure part 137.

In this case, the spring-loaded protrusion part 138 may radially protrude from the outer peripheral edge of the pressure part 137 to contact each corner of the polygonal tube 30. That is, each end of the spring-loaded protrusion part 138 may have a shape corresponding to an angle formed by the respective surfaces of the polygonal tube 30. Also, each end of the spring-loaded protrusion part 138 may contact a predetermined length of the inner surface of the polygonal tube 30.

In this construction, the spring-loaded protrusion part 138 is closely bound by each corner of the polygonal tube 30 and thus cannot be rotated in the polygonal tube 30.

Also, the spring-loaded protrusion part 138 may be combined with the pressure part 137 by a joint member 139 such as a bolt or adhesive.

Meanwhile, a mounting bracket 171 provided on the pressure plate 135 may include extension parts which form a predetermined angle with one another and extend from the center in three directions. In this case, an end of each of the extension parts may be located in a corner of the polygonal tube 30, thereby preventing rotation of the mounting bracket 171.

Also, a spring 172 connects the mounting bracket 171 and the fixing ring 32 and permits the mounting bracket 171 to apply downward pressure to the pressure plate 135.

In this case, the mounting bracket 171 may include extension parts that extend in three or more directions, and the spring 172 may be replaced by an elastic member such as an elastic string.

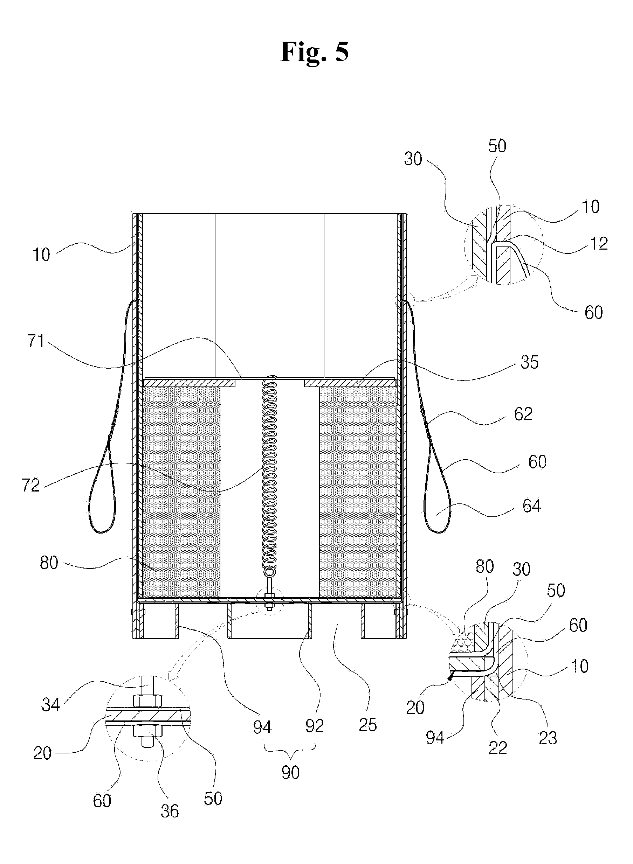

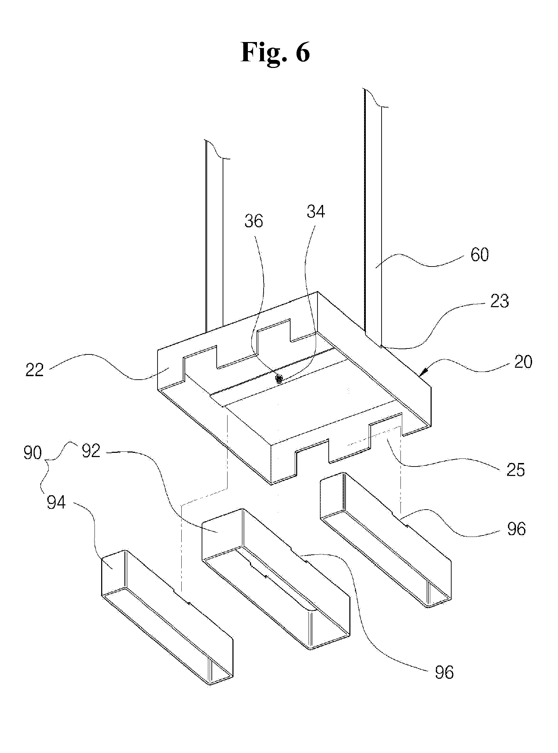

Fig. 5 is a cross-sectional view of the pail-pack for welding wire shown in Fig. 1, and Fig. 6 is an exploded perspective bottom view of a bottom plate of the pail-pack for welding wire shown in Fig. 1.

Referring to Figs. 5 and 6, penetration parts 12 may be formed through an upper portion of the outer tube 10 to face each other. The penetration parts 12 may be formed to correspond to the width and thickness of the hanging band 60.

Also, openings 23 may be formed in portions in which the support part 22 is bent on both sides of the bottom plate 20 provided at a lower end of the outer tube 10 to face each other from opposite sides of the bottom plate 20. The openings 23 may be cut to correspond to the width and thickness of the hanging band 60.

Here, the openings 23 may be formed by removing predetermined bent portions of the support part 22.

Also, each of the openings 23 may be located below the penetration part 12 in a vertical direction.

The hanging band 60 may be introduced from the outside of the outer tube 10 into the outer tube 10 through any one of the penetration parts 12, extend downward in a vertical direction, and be drawn to the outside of the bottom plate 20 through one of the openings 23.

The drawn hanging band 60 may enclose the bottom plate 20 across the bottom plate 20 and be introduced into the outer tube 10 again through another opening 23 formed opposite to the first opening 23.

Thereafter, the hanging band 60 may extend upward and be drawn out of the outer tube 10 through another penetration part 12 formed in one side of the outer tube 10.

As described above, the hanging band 60 may be provided in a vertical direction of the pail-pack for welding wire to enclose the center of the bottom plate 20, so that the pail-pack for welding wire does not lean to one side and can be stably carried.

A portion of the hanging band 60 brought in the outer tube 10 may be provided outside the moisture-proof bag 50 to prevent damage to the moisture-proof bag 50.

Also, the center of a portion of the hanging band 60 that is drawn out of the bottom plate 20 may be fixedly combined with the bolt member 34 and the nut member 36.

Also, both ends of the hanging band 60, which are drawn out through the penetration parts 12, are each folded and combined with a connecting portion 62, such as a rivet, or sewed to form a handle-type hanging part 64.

A transfer apparatus for transferring the pail-pack for welding wire may be combined with the hanging part 64.

Thus, when the hanging band 60 is lifted by the transfer apparatus combined with the hanging part 64, the pail-pack for welding wire is also lifted up. In this case, a central portion of the hanging band 60 protrudes to the outside of the bottom plate 20 and fixedly contacts the bottom plate 20, thereby preventing occurrence of an eccentric load and facilitating transfer of the pail-pack for welding wire.

Also, the hanging band 60 may be formed of the same material as automobile seat belts having enough strength to transfer the pail-pack for welding wire. For example, the hanging band 60 may be formed of nylon, polyester, or polypropylene.

Further, the hanging band 60 may be webbed to increase tensile force.

Meanwhile, a reinforcing member 90 may be provided on the center and both sides of a lower space part of the bottom plate 20 in a direction of the penetration part 25.

The reinforcing member 90 may include a central reinforcing member 92 provided on the center of the lower space part of the bottom plate 20 and side reinforcing members 94 provided on both sides thereof.

One side of the side reinforcing member 94 may guide the penetration part 25, and other sides thereof may be closely adhered to an inner lateral surface of the support part 22.

Also, an upper end of the side reinforcing member 94 may be closely adhered to a bottom surface of the bottom plate 20, and a lower end thereof may be the same as the lower end of the support part 22. A lower portion of the side reinforcing member 94 may be opened or closed.

The side reinforcing member 94 may be formed of a paper material and combined with the support part 22 using the stapler pins 24 or by sewing a string.

Meanwhile, two sides of the central reinforcing member 92 may guide the penetration part 25, and other sides thereof may be closely adhered to the inner lateral surface of the support part 22.

Also, an upper end of the central reinforcing member 92 may be closely adhered to the bottom surface of the bottom plate 20, and a lower end thereof may be the same as the lower end of the support part 22. In this case, a lower portion of the central reinforcing member 92 may be opened or closed.

Furthermore, the central reinforcing member 92 may be formed of a paper material and combined with the support part 22 using the stapler pins 24 or by sewing a string.

As described above, since the upper ends of the central reinforcing member 92 and the side reinforcing members 94 are closely adhered to the bottom surface of the bottom plate 20 so as to support the bottom plate 20, the bending of the bottom plate 20 can be prevented even when the heavy welding wire 80 is disposed on the bottom plate 20.

Also, the fork of the forklift truck brought into the penetration part 25 may be guided by one sides of the central reinforcing member 92 and the side reinforcing members 94, thereby making the fork of the forklift truck easier to bring into or take out of the penetration part 25.

Grooves 96 having a shape corresponding to the hanging band 60 may be formed in the upper ends of the central reinforcing member 92 and the side reinforcing members 94.

The grooves 96 can prevent the hanging band 60 from pressing and damaging to the upper ends of the central reinforcing member 92 and the side reinforcing members 94 and weakening adhesion of the reinforcing member 90 to the bottom plate 20.

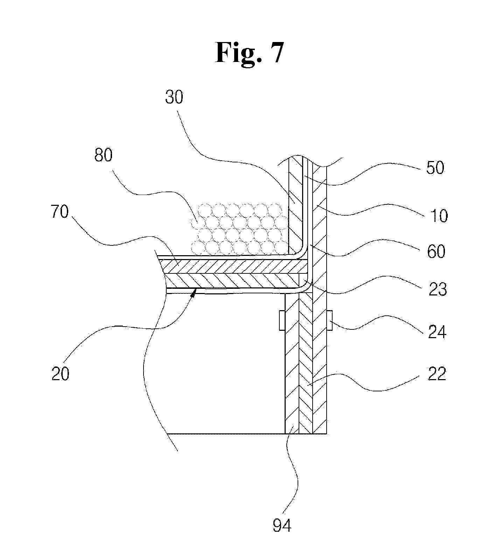

Fig. 7 is a partial cross-sectional view of the pail-pack for welding wire shown in Fig. 1.

As shown in Fig. 7, a bottom reinforcing plate 70 may be provided on a top surface of a bottom plate 10. The bottom reinforcing plate 70 may have a shape corresponding to an inner cross-section of the outer tube 10. Thus, the bottom reinforcing plate 70 may reinforce the strength of the bottom plate 10 and protect the bottom plate 10 from the load of the welding wire 80 contained therein.

The bottom reinforcing plate 70 may be provided on the moisture-proof bag 50 located on the bottom plate 20 or provided between the bottom plate 20 and the moisture-proof bag 50.

Also, grooves (not shown) corresponding to the thickness and width of the hanging band 60 may be formed on both sides of the bottom reinforcing plate 70 such that the hanging band 60 can be smoothly brought into the outer tube 10.

Also, the bottom reinforcing plate 70 may be formed of a paper material obtained by compressing multifold paper layers by means of a press processing technique using a mold, thereby making the pail-pack for welding wire easier to recycle.

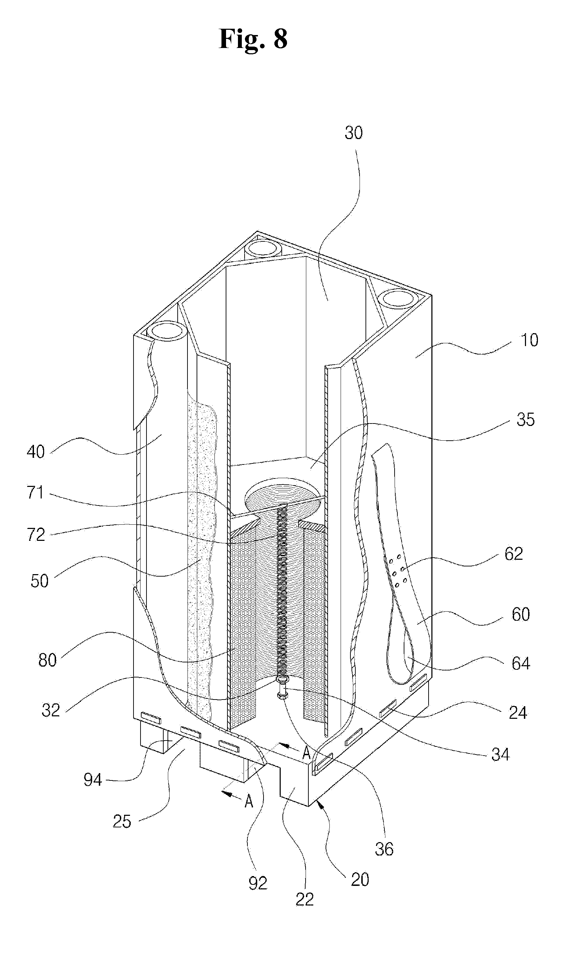

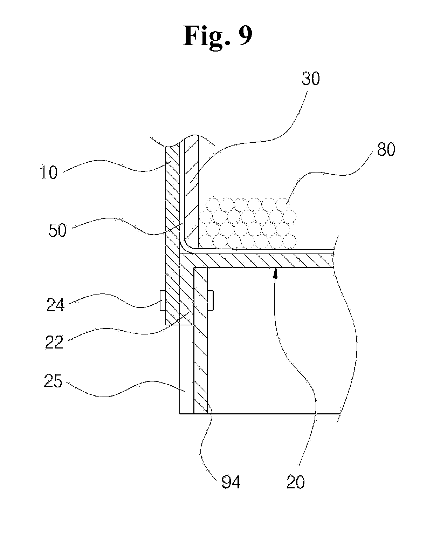

Fig. 8 is a partially cutaway perspective view of a pail-pack for welding wire according to a second exemplary embodiment of the present invention, and Fig. 9 is a partial cross-sectional view taken along line A-A of Fig. 8. The pail-pack for welding wire according to the second exemplary embodiment of the present invention has the same construction as the pail-pack for welding wire according to the first exemplary embodiment except that a bottom plate 20 is combined with an outer tube 10 such that an upper end of a penetration part 25 is the same as a lower end of the outer tube 10. Thus, a description of the same components as in the first exemplary embodiment will be omitted here.

As shown in Figs. 8 and 9, the bottom plate 20 may be provided such that the upper end of the penetration part 25 is in the same position as the lower end of the outer tube 10.

Thus, a process of penetrating a portion of a lower lateral surface of the outer tube 10 to correspond to the penetration part 25 may be omitted, thereby improving process simplicity and productivity.

Also, the outer tube 10 may be combined with the bottom plate 20 using a plurality of stapler pins 24 connected along a portion of a support part 22 that contacts the outer tube 10. As an alternative to the stapler pins 24, the outer tube 10 may be combined with the bottom plate 20 by sewing a string.

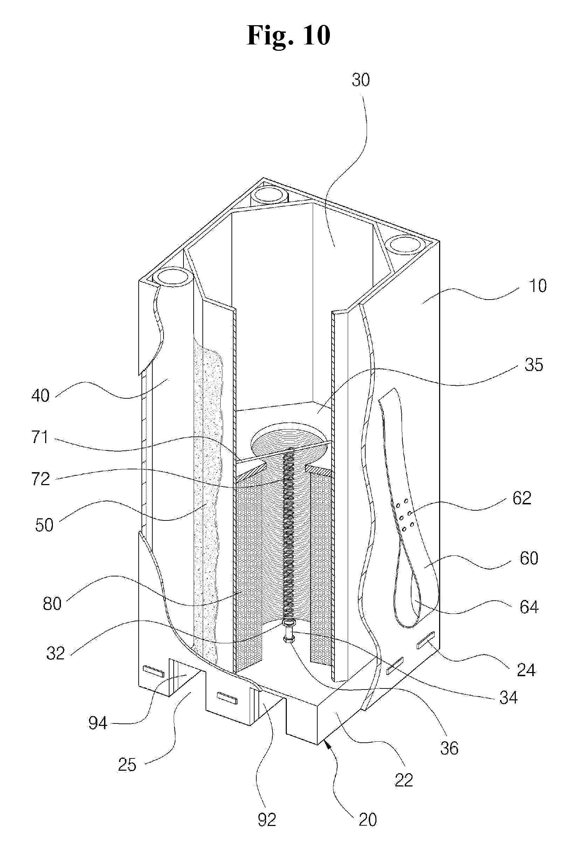

Fig. 10 is a partially cutaway perspective view of a pail-pack for welding wire according to a third exemplary embodiment of the present invention. The pail-pack for welding wire according to the third exemplary embodiment of the present invention has the same construction as the pail-pack for welding wire according to the first exemplary embodiment except that an upper end of a penetration part 25 forms the same surface as a bottom surface of a bottom plate 20. Thus, a description of the same components as in the first exemplary embodiment will be omitted here.

As shown in Fig. 10, a top surface of the penetration part 25 may form the same surface as the bottom surface of the bottom plate 20.

Thus, the entire top surface of a fork of a forklift truck brought into the penetration part 25 contacts the bottom surface of the bottom plate 20, so that the pail-pack for welding wire can be carried more stably.

As explained thus far, a pail-pack for welding wire according to the present invention has the following effects.

First, at least one penetration part used for transportation may be formed in a support part of a bottom plate so that a fork of a forklift truck can be brought into the bottom plate. Thus, the pail-pack for welding wire can be carried without an additional component such as a pallet.

Second, an outer tube, the bottom plate, a polygonal tube, a support member, and other various components may be formed of a paper material obtained by compressing multifold paper layers by means of a press processing technique using a mold, thereby reinforcing the strength and making the pail-pack easier to recycle.

Third, the outer tube may be formed to have a square cross-section. Thus, an additional mold for shaping the outer tube is not required, thereby reducing production cost. Also, a plurality of pail-packs for welding wire can be closely adhered to one another during safekeeping, thereby preventing waste of space for safekeeping and facilitating loading of the pail-packs.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A pail-pack for welding wire, comprising:
an outer tube forming a main body and having a square cross-section;
a cover covering an upper end of the outer tube; and
a bottom plate provided inside a lower end of the outer tube and having a support part that is bent downward from an edge of the bottom plate to contact an inner lateral surface of the lower end of the outer tube.

2. The pail-pack for welding wire according to claim 1, further comprising at least one penetration part for transportation formed through a pair of opposite support parts.

3. The pail-pack for welding wire according to claim 2, wherein a portion of a lower lateral surface of the outer tube is penetrated to correspond to the penetration part.

4. The pail-pack for welding wire according to claim 2, wherein an upper end of the penetration part forms the same surface as a bottom surface of the bottom plate.

5. The pail-pack for welding wire according to claim 2, further comprising a reinforcing member provided on at least one of the center and both sides of a lower space part of the bottom plate in a direction of the penetration part.

6. The pail-pack for welding wire according to claim 1, further comprising a polygonal tube inscribed in the outer tube and having a polygonal cross-section, the polygonal tube containing a welding wire therein.

7. The pail-pack for welding wire according to claim 6, further comprising a bottom reinforcing plate provided between a top surface of the bottom plate and a lower portion of the polygonal tube and having a shape corresponding to an inner cross-section of the outer tube.

8. The pail-pack for welding wire according to claim 6, wherein a support member is provided in a lengthwise direction of the polygonal tube between the outer tube and the polygonal tube, and has one side contacting an inner surface of the outer tube and the other side contacting an outer surface of the polygonal tube to form a support structure.

9. The pail-pack for welding wire according to claim 6, wherein a moisture-proof bag is formed of vinyl and provided between the outer tube and the polygonal tube to enclose the polygonal tube.

10. The pail-pack for welding wire according to claim 1, further comprising a hanging band including: two ends exposed through both sides of the outer tube; and a central portion enclosing a bottom surface of the bottom plate through openings formed on both sides of the bottom plate.

11. The pail-pack for welding wire according to claim 10, wherein the openings are formed in portions in which the support parts are bent to face each other from opposite sides of the bottom plate to correspond to the width and thickness of the hanging band.

12. The pail-pack for welding wire according to claim 10, wherein the central portion of the hanging band is combined with a bolt member and a nut member provided through the center of the bottom plate and fixed to the bottom plate.

13. The pail-pack for welding wire according to claim 10, wherein the hanging band is formed of polypropylene.

14. The pail-pack for welding wire according to claim 1, wherein the lower end of the outer tube is combined with the support part by sewing a string or by connecting a plurality of stapler pins in a circumferential direction.

15. The pail-pack for welding wire according to claim 1, further comprising a pressure plate provided on the welding wire.

16. The pail-pack for welding wire according to claim 1, 6, or 8, wherein the cover, the outer tube, the bottom plate, the polygonal tube, and the support member are formed of a paper material that is obtained by compressing multifold paper layers using a press processing technique.

17. The pail-pack for welding wire according to claim 1, wherein the cover comprises: a top surface having a shape corresponding to the cross-section of the outer tube; and an adhesion part that is bent in a certain direction from an edge of the top surface and closely adhered to at least one of outer and inner surfaces of the outer tube.
